# EUROPEAN PATENT SPECIFICATION

(11) **EP 2 747 371 B1**
(45) Date of publication and mention of the grant of the patent: **07.02.2018**
(21) Application number: 12306669.8
(22) Date of filing: 24.12.2012
(51) Int. Cl.: H04L 29/06, G06F 21/60

(54) **ACCESS POLICY DEFINITION WITH RESPECT TO A DATA OBJECT**
ACCESS-POLICY-DEFINITION MIT BEZUG AUF EIN DATENOBJEKT
DÉFINITION DES STRATÉGIES D'ACCÈS PAR RAPPORT À UN OBJET DE DONNÉES

(43) Date of publication of application: 25.06.2014
(73) Proprietor: ALCATEL LUCENT, 92100 Boulogne-Billancourt (FR)
(72) Inventor: Pergament, David, 91620 Nozay (FR); Aghasaryan, Armen, 91620 Nozay (FR); Kamga, Guy-Bertrand, 91620 Nozay (FR)
(74) Representative: Berthier, Karine

(56) References cited:
- EP-A1- 2 528 006
- US-A1- 2003 074 356
- US-A1- 2008 155 652
- US-A1- 2010 205 541

## Description

### FIELD OF THE INVENTION

An aspect of the invention relates to a method of defining an access policy with respect to a data object. The method may be used, for example, in relation with a communication medium through which a user can provide other users access to a data object. Other aspects of the invention relate to a device readable medium comprising a set of instructions, and a communication terminal.

### BACKGROUND OF THE INVENTION

Present-day communication media allow for easy dissemination of information. More and more information is presented and shared among more and more persons through a wide variety of communication media. This raises several issues. How to safeguard privacy? Information may be disseminated in an undesired way. How to avoid an information overload? Useful information may be drowned in a huge quantity of information that is presented.

A communication medium user typically presents and shares information by providing other communication medium users access to a data object. The data object may be, for example, a message that the communication medium user has composed. The message may be in the form of, for example, an e-mail or a post. As another example, the data object may be a data file that the communication medium user has at its disposal. Access may be provided by, for example, communicating the data object to other communication medium users. As another example, access may be granted by placing the data object on a widely accessible platform, while restricting access to the data object by means of, for example, one or more secret codes.

Defining an appropriate group of communication medium users who should have access to a data object can be a cumbersome task. This is particularly true in case there are relatively many data objects to be presented and shared. Information contained in one data object may differ from that contained in another data object so that different audiences should be addressed. There is a risk that a communication medium user who is potentially interested in information contained in a data object, is not included in a list of those to whom access is provided. Conversely, a communication medium user who is not interested in that information may mistakenly be included in the list. What can be worse, the list may mistakenly include someone who should not be entrusted with having access to the data object, because that person may disseminate information contained therein in an undesired way.

### SUMMARY OF THE INVENTION

There is a need for a solution that allows for relatively easily defining an appropriate access policy with regard to a data object.

In order to better address this need, in accordance with an aspect of the invention, there is provided a method of defining an access policy with respect to a data object, the method involving a data structure that comprises:
(i) at least one interest-based access list specifying a metadata and a group of persons that are potentially interested in accessing a data object that can be characterized by this metadata; and
(ii) at least one privacy-based access list specifying a metadata and a group of persons that are authorized to access a data object that can be characterized by this metadata;
the method comprising:
- an analysis step in which the data object is analyzed so as to obtain at least one metadata that characterizes the data object;
- a list identification step in which a search is carried out in the data structure so as to identify at least one interest-based access list and at least one privacy-based access list specifying metadata that matches with a metadata that characterizes the data object;
- an access list composition step in which a recommended access list for the data object is composed, the recommended access list specifying those persons who occur in at least one interest-based access list that has been identified, as well as in at least one privacy-based access list that has been identified.

Another aspect of the invention concerns a communication terminal arranged to access a data structure that comprises:
(i) at least one interest-based access list specifying a metadata and a group of persons that are potentially interested in accessing a data object that can be characterized by this metadata; and
(ii) at least one privacy-based access list specifying a metadata and a group of persons that are authorized to access a data object that can be characterized by this metadata;
the communication terminal comprising:
- an analysis module arranged to analyze a data object so as to obtain at least one metadata that characterizes the data object;
- a list identification module arranged to carry out a search in the data structure so as to identify at least one interest-based access list and at least one privacy-based access list specifying metadata that matches with a metadata that characterizes the data object;
- an access list composition module arranged to compose a recommended access list for the data object, the recommended access list specifying those persons who occur in at least one interest-based access list that has been identified, as well as in at least one privacy-based access list that has been identified.

Yet another aspect of the invention concerns a device readable medium comprising a set of instructions that enables a processor, which is capable of executing the set of instructions, to carry out the method according as defined hereinbefore.

In each of these aspects, the recommended access list can be automatically generated by means of, for example, one or more suitably programmed processors. Nonetheless, the recommended access list will generally be appropriate because this list is generated by taking into account aspects of both privacy and interest with regard to information contained in a data object. In generating the recommended access list, a wide audience of interested persons is sought, while excluding those who cannot be entrusted with having access to the information. Priority is given to privacy. An appropriate access policy with regard to a data object can thus relatively easily be defined.

An embodiment of the invention advantageously comprises one or more of the following additional features, which are described in separate paragraphs. These additional features each contribute to relatively easily defining an appropriate access policy with regard to a data object.

The metadata advantageously characterizes at least one of the following: content of the data object, a language in the data object, and a type to which the data object belongs.

An access list may advantageously be identified in case the metadata that characterizes the data object and the metadata specified by the access list are identical. The access list can be either an interest-based access list, or a privacy-based access list.

An access list may advantageously be identified in case the metadata that characterizes the data object and the metadata specified by the access list satisfy a given similarity criterion. Here too, the access list can be either an interest-based access list, or a privacy-based access list.

The privacy-based access list advantageously specifies for a person at least one among several types of actions that the person can carry out with respect to a data object.

In case the data object comprises several segments, the data object is advantageously analyzed on a per segment basis, so as to obtain respective metadata for respective segments of the data object. Respective privacy-based access lists are then advantageously identified for respective segments of the data object.

In case the data object comprises a segment including sensitive information so that a privacy-based access list for this segment comprises relatively few persons, an indication of the presence of such a sensitive segment may advantageously be provided through a user interface.

In the aforementioned case, a truncated version of the data object may advantageously be formed, whereby the truncated version cannot provide access to the segment that includes the sensitive information.

An interest-based access list may advantageously be formed as follows. A collection of data objects, which has at least partially been obtained from different persons, is analyzed so as to generate respective metadata for respective data objects, whereby a metadata characterizes a data object. Respective interest profiles are defined for respective persons, an interest profile of a person specifying metadata that characterize data objects that have been obtained from that person. A cluster of persons is identified that have similar metadata interest profiles in respect of at least one metadata, the cluster of persons forming the interest-based access list that relates to the at least one metadata.

Generating respective metadata for respective data objects advantageously involves a semantic analysis of data objects.

Respective interest profiles are advantageously defined according to a template that specifies respective metadata items and respective fields associated therewith. A field associated with a metadata item is provided with an indication of the extent to which the metadata item can characterize data objects that have been obtained from the person to which the interest profile pertains.

Respective metadata items specified in the template are advantageously defined on the basis of metadata that has been generated by the aforementioned analysis of data objects.

A privacy-based access list may advantageously be formed as follows. Respective propagation scores are assigned to respective persons by assessing dissemination of data objects by these respective persons. A propagation score of a person represents the extent to which that person disseminates data objects. A cluster of respective persons is defined that have respective propagation scores that are all acceptable with regard to at least one metadata, The cluster of persons form a privacy-based access list that relates to the at least one metadata.

For the purpose of illustration of the invention summarized hereinbefore, as well as the additional features, a detailed description of particular embodiments is provided with reference to drawings.

### BRIEF DESCRIPTION OF THE DRAWINGS

FIG. 1 is a block diagram that illustrates a communication infrastructure that comprises a communication medium and various communication terminals.
FIG. 2 is a block diagram that illustrates an access list generator, which forms part of a communication terminal.
FIG. 3 is a flow chart diagram that illustrates a method of generating a collection of interest-based access lists and a collection of privacy-based access lists.
FIG. 4 is a table diagram that illustrates a profile template.
FIG. 5 is a conceptual diagram that illustrates an access list, which may be an interest-based access list or a privacy-based access list.
FIG. 6 is a flow chart diagram that illustrates a method of generating a recommended access list.
FIG. 7 is a conceptual diagram that illustrates a data object that has undergone an analysis.
FIG. 8 is a conceptual diagram that illustrates a combining of identified lists so as to define a recommended access list.

### DETAILED DESCRIPTION

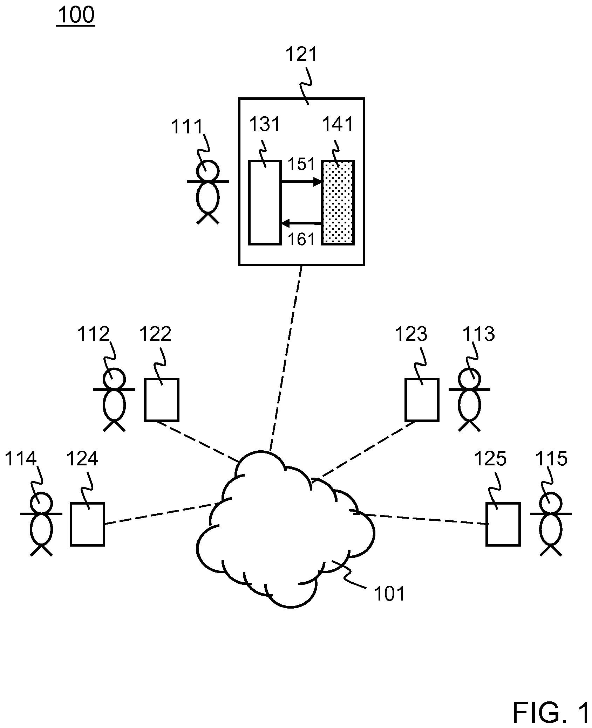

FIG. 1 schematically illustrates a communication infrastructure 100 that comprises a communication medium 101, through which various persons 111-115 may communicate with each other by means of various communication terminals 121-125. The communication medium 101 may be, for example, a so-called social medium, such as, for example, Facebook ® or LinkedIn ® ("Facebook" is a registered trademark of Facebook, Inc.; "LinkedIn" is a registered trademark of LinkedIn Corporation). FIG. 1 illustrates, by way of example, five communication terminals 121-125 that belong to five persons 111-115, respectively. These persons, as well as other persons who can connect to the communication medium 101, will be referred to as a communication medium user hereinafter.

In more detail, communication terminal 121 comprises a communication interface 131 and an access list generator 141. The communication interface 131 may be in the form of an application that has been installed on communication terminal. The same applies to the access list generator 141, which will be described in greater detail hereinafter. The other communication terminals 122-125 may be arranged in a similar manner.

Basically, a communication medium user can provide other communication medium users access to a data object through the communication medium 101. The data object may be, for example, a message that the communication medium user has composed, or a data file that the communication medium user has at its disposal, or a combination of these two. Access can be provided by, for example, communicating the data object to other communication medium users. As another example, access may be granted by placing the data object on a widely accessible platform, while restricting access to the data object by means of, for example, one or more secret codes.

Communication medium user 111, to whom the communication terminal 121 belongs, can provide other communication medium users access to a data object 151 in the following manner. Communication medium user 111 uses the communication interface 131 to define the data object 151, which is to be made available. The communication interface 131 submits the data object 151 to the access list generator 141. In response, the access list generator 141 provides a recommended access list 161, which specifies a group of persons who should be given access to the data object 151.

An effective access list, which specifies a group of persons who will actually be given access to the data object, may then be established on the basis of the recommended access list 161. For example, communication medium user 111 may validate the recommended access list 161, in which case this list will constitute the effective access list. Communication medium user 111 may also modify the recommended access list 161, by adding or removing one or more communication medium users, so as to obtain the effective access list.

In any case, access list generator 141 assists communication medium user 111 in establishing the effective access list, that is, the group of persons that will actually have access to the data object 151. The access list generator 141 may further assist communication medium user 111 in establishing respective types of access that respective communication medium users will have to the data object.

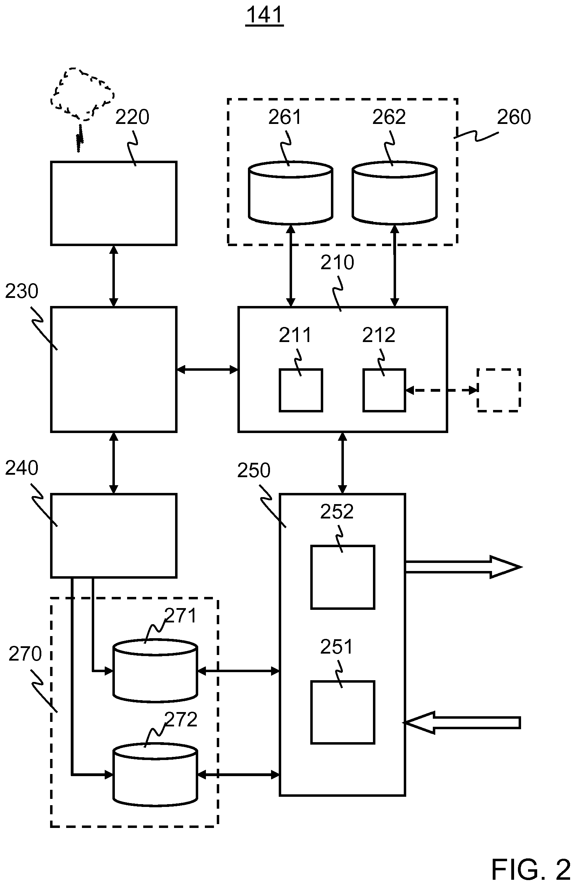

FIG. 2 schematically illustrates the access list generator 141 by means of a block diagram. The access list generator 141 comprises various functional modules: a metadata generation module 210, a propagation evaluation module 220, a profile generation module 230, a clustering module 240, and an access list composition module 250. In more detail, the metadata generation module 210 may comprise a language analysis module 211, and a semantic analysis module 212. The access list composition module 250 may comprise a list identification module 251, and a list combination module 252. The aforementioned functional modules may each be implemented by means of, for example, a set of instructions that has been loaded into an instruction execution system. In such a software-based implementation, the set of instructions defines operations that the functional module concerned carries out, which will be described hereinafter.

The access list generator 141 may further comprise a data object database 260 and an access list database 270, or have access to these databases. The data object database 260 comprises a collection of data objects 261 belonging to communication medium user 111, who owns communication terminal 121, which comprises the access list generator 141 illustrated in FIG. 2. Communication medium user 111 will be referred to as terminal owner hereinafter. The data objects that belong to the terminal owner will be referred to as owner-associated data objects hereinafter. The data object database 260 further comprises a collection of data objects 262 obtained from other communication medium users. These data objects will be referred to as peer-associated data objects hereinafter.

The access list database 270 comprises a collection of interest-based access lists 271 and a collection of privacy-based interest lists 272. An interest-based access list specifies a metadata and a group of communication medium users that are potentially interested in accessing a data object that can be characterized by this metadata. A privacy-based access list specifies a metadata and a group of communication medium users that are authorized to access a data object that can be characterized by this metadata.

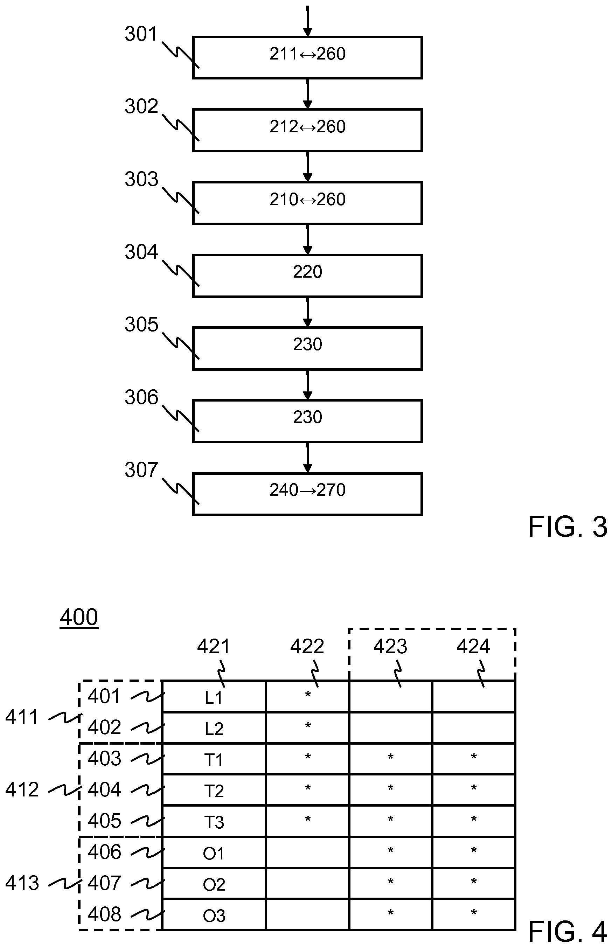

FIG. 3 illustrates a method of generating the collection of interest-based access lists 271 and the collection of privacy-based access lists 272. The method comprises a series of steps 301-307, which involve the aforementioned functional modules of the access list generator 141. FIG. 3 may be regarded as a flowchart representation of a software program that invokes these functional modules to carry out various operations described hereinafter.

In a language analysis step 301, the language analysis module 211 of the metadata generator module applies a language analysis to data objects in the data object database 260. In applying the language analysis to the collection of owner-associated data objects, the language analysis module 211 identifies a set of languages used by the terminal owner. In applying the language analysis to the collection of peer-associated data objects, the language analysis module 211 can identify a set of languages used by another communication medium user. The language analysis module 211 can do so for several, or even all, communication medium users of whom data objects are present in the data object database 260.

In a semantic analysis step 302, the semantic analysis module 212 of the metadata generator module applies a semantic analysis to data objects in the data object database 260. In applying the semantic analysis to a data object, the semantic analysis module 212 generates metadata that semantically characterizes content of the data object. This semantic metadata can indicate one or more themes to which the data object relates. For example, a data object may be a message comprising comments on a movie that has recently been released. In that case, the semantic metadata that has been generated for this data object may indicate, for example, "movie" and "critics".

The semantic analysis may be carried out by means of a technique that involves Latent Dirichlet Allocation (LDA), or that involves ontology-based clustering, or both. The semantic analysis module 212 may comprise a training interface that allows a user training this module by labeling a set of data objects. In doing this labeling, the user specifies semantic metadata for a data object within the set. The data object, with its user-specified semantic metadata, then constitutes a training example.

The semantic metadata that has been generated for a data object is associated with the communication medium user from which the data object has been obtained. This association may be expressed, for example, by attaching an attribute to the semantic metadata, whereby the attribute indicates this communication medium user.

Once the semantic analysis step 302 has been completed, a set of semantic metadata will be available that indicates various themes that occur in the collection of owner-associated data objects, as well as in the collection of peer-associated data objects. Moreover, the set of semantic metadata allows determining, for a communication medium user, the extent to which a particular semantic metadata characterizes data objects from this communication medium user. It is thus possible to determine whether a communication medium user is potentially interested in a particular theme, or not. This will be discussed in greater detail hereinafter.

In an object type inventory step 303, the metadata generation module 210 identifies different types of data objects that are present in the data object database 260. In doing so, the metadata generation module 210 makes an inventory of these different types of data objects. In the inventory, a distinction can be made between, for example, text documents, image files, and sound files. In more detail, a distinction can be made between, for example, different types of text documents, such as messages, posts, articles, books, and so on. The distinction may also relate to different formats that data objects may have.

In a propagation evaluation step 304, the propagation evaluation module 220 assesses dissemination of data objects by communication medium users. It should be noted that this dissemination assessment can be a continuous process, rather than a single step that is carried out within a relatively short time span. The dissemination assessment may concern data objects that the terminal owner has made available to other communication medium users. In that case, it is detected whether another communication medium user has made such a data object available to yet other communication medium users, or not.

The propagation evaluation step 304 allows assessing the extent to which a particular communication medium user is a "propagator". This detection result will be referred to as "propagation score" hereinafter. A communication medium user who has a high propagation score is a strong propagator. Conversely, a communication medium user who has a low propagation score is a weak propagator. Patent publication WO 2012/136462 A1 describes a technique for assigning a propagation score to a communication medium user.

In carrying out the dissemination assessment, the propagation evaluation module 220 preferably takes into account themes that occur in a data object, as well as the type to which the data object belongs. In this way, the propagation evaluation module 220 can provide respective propagation scores for a communication medium user, which relate to respective metadata items. Propagation scores may relate to metadata items that have been generated in the semantic analysis step 302 and in the object type inventory step 303. For example, a privacy score that relates to a metadata item specifying a theme can indicate whether a communication medium user is a relatively strong propagator of data objects in which the theme occurs, or not. As another example, a privacy score that relates to a metadata item specifying a data object type can indicate whether a communication medium user is a relatively strong propagator of data objects of this type, or not.

In a profile template generation step 305, the profile generation module 230 creates a profile template on the basis of metadata that the metadata generation module 210 has obtained in previous steps, which have been described hereinbefore. This metadata comprises several categories: metadata that indicates the languages used by the terminal owner, metadata that indicates various themes that occur in the data object database 260, and metadata that indicates various object types that are present in the data object database 260.

The profile template specifies various metadata items, preferably at least one metadata item in each of the aforementioned categories. A metadata item that is included in the profile template preferably relates to a relatively significant proportion of data objects in the data object database 260. The profile template serves to create respective profiles for respective communication medium users in terms of personal interest and privacy respectfulness. That is, a profile for a communication medium user is obtained by completing the profile template.

FIG. 4 schematically illustrates an example of a profile template by means of a table 400. The table comprises various rows 401-408, each of which relates to a particular metadata item. In the table 400, there are three clusters of rows 411-413, each cluster relating to a different category of metadata. A first cluster 411 of rows 402, 403 relate to metadata items indicating languages L1, L2 used by the terminal owner. A second cluster 412 of rows 403-405 relate to metadata items indicating various themes T1, T2, T3 that occur in the data object database 260. A third cluster 413 of rows 406-408 relate to metadata items that indicate various object types O1 O2, O3 that are present in the data object database 260.

The table 400 further comprises four columns 421-424. A first column 421 specifies the various metadata items that are included in the profile template. A cell in the first column 421, which belongs to a particular row, specifies the metadata item to which the row relates. Accordingly, the cell in row 401 specifies a language L1 used by the terminal owner, and the cell in row 402 specifies another language L2 used by the terminal owner. The cell in row 403 specifies a theme T1 that occurs in the data object database 260. The cell in row 404 specifies another theme T2, and the cell in row 405 specifies yet another theme T3. The cell in row 406 specifies a data object type O1 that is present in the data object database 260. The cell in row 407 specifies another data object type 02, and the cell in row 408 specifies yet another data object 03.

The other three columns 422-424 in the table 400 comprise data entry fields, whereby respective cells represent respective data entry fields. A second column 422 comprises data entry fields for interest-related indications that pertain to a communication medium user. A third column 423 and a fourth column 424 comprise data entry fields for privacy-related indications that pertain to the communication medium user. In fact, a privacy-related indication may define whether the communication medium user should be given access, or not, to a particular data, from the point of view of privacy of the terminal owner.

In more detail, a cell in the second column 422, which belongs to a particular row, constitutes a data entry field for an interest-related indication with respect to the metadata item to which the particular row relates. For example, row 401 relates to language L1 and comprises a cell in the second column 422. This cell constitutes a data entry field for an indication on whether a communication medium user practices language L1, or not. This indication will typically be a Boolean value. As another example, row 403 relates to theme T1 and comprises a cell in the second column 422. This cell constitutes a data entry field for an indication on the extent to which a communication medium user is interested in theme. This indication can be a real value. For example, the indication may be comprised in a range between 0 and 1, whereby 0 indicates no interest, and 1 indicates a high interest.

A cell in the third column 423, which belongs to a particular row, constitutes a data entry fields for an indication on whether a communication medium user can be entrusted to have a read-type access with respect to the metadata item to which the particular row relates. For example, row 404 relates to theme T2 and comprises a cell in the third column 423. This cell constitutes a data entry field for an indication on whether a communication medium user can be entrusted to have a read-type access to a data object in which theme T2 occurs. As another example, row 406 relates to data object type O1 and comprises a cell in the third column 423. This cell constitutes a data entry field for an indication on whether a communication medium user can be entrusted to have a read-type access to a data object of type O1. The aforementioned indications may be in the form of, for example, Boolean values.

In a similar way, a cell in the fourth column 424, which belongs to a particular row, constitutes a data entry field for an indication on whether a communication medium user can be entrusted to have a write-type access with respect to the metadata item to which the particular row relates. A write-type access allows the communication medium user to interact with a data object, such as, for example, appending comments or tags, or both.

In a profile generation step 306, the profile generation module 230 creates respective profiles for respective communication medium users. The profile generation module 230 creates a profile for a communication medium user by completing the profile template with indications that pertains to the communication medium user. These indications are based on metadata that the metadata generation module 210 provides, as well as propagation scores that the propagation evaluation module 220 provides, in so far as this data relates to the communication medium user concerned.

More specifically, referring to the profile template illustrated in FIG. 4, the cell in the second column 422 and in row 401, which relates to language L1, is provided with an indication on whether the communication medium user for which the profile is created uses language, or not. As mentioned hereinbefore, this indication may be in the form of a Boolean value. The indication can be derived from metadata that the language analysis module 211 has generated, as described hereinbefore. This metadata indicates whether the communication medium user has any data objects in language and, if so, in what proportion. The cell in the second column 422 and in row 402, which relates to language L2, is provided with an indication in a similar way.

The cell in the second column 422 and in row 403, which relates to theme T1, is provided with an indication on the extent to which the communication medium user, for which the profile is created, is interested in theme T1. As mentioned hereinbefore, this indication may be in the form of a real value in a range between 0 and 1. The indication can be derived from metadata that the semantic analysis module 212 has generated, as described hereinbefore. This metadata indicates whether theme T1 occurs in any data objects the communication medium user and, if so, in what proportion, and even in what intensity. The cell in the second column 422 and in row 404, which relates to theme T2, is provided with an indication in a similar way. The same applies to cell in the second column 422 and in row 405, which relates to theme T3.

The cell in the third column 423 and in row 403, which relates to theme T1, is provided with an indication on whether the communication medium user for which the profile is created, may have a read-type access to a data object in which theme T1 occurs. As mentioned hereinbefore, this indication may be in the form of a Boolean value. The Boolean value, which indicates access or no access, can be determined on the basis of a propagation score that the propagation evaluation module 220 has determined for the communication medium user concerned, and with respect to theme T1, as described hereinbefore. The Boolean value can further be determined on the basis of an indication of the extent to which theme T1 is sensitive to the terminal owner. For example, if theme T1 is sensitive and the communication medium user for which the profile is created is a strong propagator, the Boolean value may indicate that this communication medium user should not have a read type access.

The cell in the second column 422 and in row 404, which relates to theme T2, is provided with an indication in a similar way. The same applies to cell in the second column 422 and in row 405, which relates to theme T3. The same also applies to cells in rows 406-408, which relate to different object types. An object type may be declared as sensitive, and the propagation score will determine whether an access right will be granted, or not.

The cell in the fourth column 424 and in row 403, which relates to theme T1, is provided with an indication on whether the communication medium user, for which the profile is created, may have a write-type access to a data object in which theme T1 occurs. This indication can be determined in a similar fashion as that for the read-type access, which has been described hereinbefore. However, stricter criteria will in general be applied. For example, a communication medium user that is a moderate propagator may have a read-type access to a data object in which a sensitive theme occurs, but this user may have no write-type access.

A profile that has been generated for a communication medium user comprises, in fact, two different types of profiles: an interest-based profile and a privacy-based profile. The interest-based profile comprises interest-related indications that have been entered in the second column 422 of the profile template illustrated in FIG. 4. The privacy-based profile comprises privacy-related indications in the third column 423 and in the fourth column 424 of the profile template illustrated in FIG. 4.

In a clustering step 307, the clustering module 240 identifies a cluster of communication system users that have similar interests-based profiles in respect of at least one metadata item. The clustering module 240 may identify respective clusters in respect of respective metadata items, or respective sets of metadata items. The respective clusters may form respective interest-based access lists, which may be entered in the access list database 270 illustrated in FIG. 2.

For example, the clustering module 240 may identify a cluster of communication medium users who use language L1, which is included in the metadata template illustrated in FIG. 4. This cluster may then form an interest-based access list that specifies these communication medium users, as well as language L1 that they all use. The clustering module 240 may identify another cluster of communication system users who are interested in theme T1, which is included in the metadata template illustrated in FIG. 4. This cluster may then form an interest-based access list that specifies these communication medium users, as well as theme T1 that they are all interested in. A distinction on whether a communication system user is interested in theme T1, or not, can be made on the basis of the interest-based indication in the profile that relates to theme T1, which has been entered in the second column 422 of the metadata template. For example, in case this indication exceeds a threshold, the communication system user can be considered as interested in theme.

In a similar way, the clustering module 240 identifies a cluster of communication system users that have similar privacy-based profiles in respect of at least one metadata item. The clustering module 240 may identify respective clusters in respect of respective metadata items, or respective sets of metadata items. The respective clusters may form respective privacy-based access lists, which may be entered in the access list database 270 illustrated in FIG. 2.

For example, the clustering module 240 may identify a cluster of communication medium users who have a read-type access in respect of theme T2, which is included in the metadata template illustrated in FIG. 4. This cluster may then form a privacy-based access list that specifies these communication medium users, as well as theme T2 to which they all have access, and the type of access, namely "read". The clustering module 240 may identify another cluster of communication system users who have a write-type access in respect of data object type 03, which is specified in the metadata template illustrated in FIG. 4. This cluster may then form a privacy-based access list that specifies these communication medium users, as well as data object type 03 to which they all have access, and the type of access, namely "write".

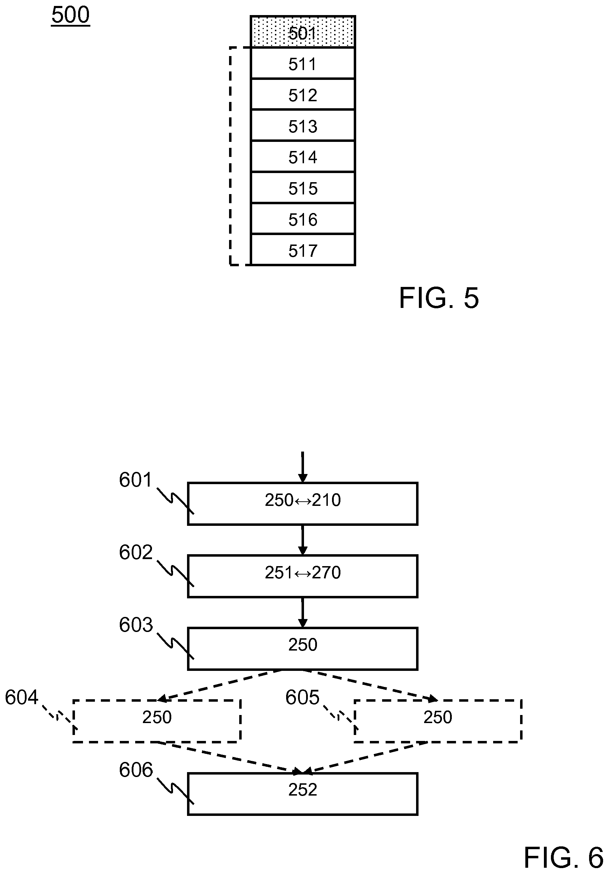

FIG. 5 schematically illustrates an access list 500, which may be an interest-based access list or a privacy-based access list. The access list 500 specifies metadata 501 to which the access list pertains, and one or more communication medium users 511-517 that are included in this list. The metadata 501 that is specified may comprise a single metadata item or multiple metadata items. For example, the access list 500 may pertain to a single language or multiple languages. In the latter case, the communication medium users 511-517 that are included in the list all use each language that is specified. As another example, the access list 500 may pertain to a language in combination with a theme. In that case, the communication medium users 511-517 that are included in the list all use the language that is specified, and are all interested in the theme that is specified.

FIG. 6 illustrates a method of generating a recommended access list. The method comprises a series of steps 601-606, which involve functional modules of the access list generator 141 illustrated in FIG. 2. FIG. 6 may be regarded as a flowchart representation of a software program that invokes these functional modules to carry out various operations described hereinafter.

The access list generator 141 illustrated in FIG. 2 carries out the method illustrated in FIG. 6 when a data object is submitted to the access list generator 141. As described to hereinbefore with reference to FIG. 1, the communication interface 131 may submit a data object 151 to the access list generator 141, when the communication interface 131 has received an indication from communication medium user 111 that the data object 151 is to be made available to other communication medium users.

In a data object analysis step 601, the access list composition module 250 illustrated in FIG. 2 submits the data object to the metadata generation module 210. The metadata generation module 210 then applies a language analysis, a semantic analysis, and an object type analysis to the data object. These analysis are similar to those carried out in the language analysis step 301, the semantic analysis step 302, and the object type inventory step 303, respectively, described hereinbefore with reference to FIG. 3.

The language analysis provides metadata specifying one or more languages used, if any, in the data object. The semantic analysis provides metadata that characterizes the content of the data object. This metadata may thus specify one or more themes that occur in the data object. The object type analysis provides metadata specifying a type to which the data object belongs. In this respect, it should be noted that the data object may comprise several different types of smaller data objects, or segments. For example, the data object to be analyzed may be a message with one or more files attached thereto.

In the data object analysis step 601, the metadata generation module 210 may analyze the data object on a per segment basis. In general, a data object can comprise several segments. For example, a text document may comprise several paragraphs. As another example, a message may comprise a body part and one or more attachments. The metadata generation module 210 may thus provide respective metadata for respective segments of the data object. As mentioned hereinbefore, there are various categories of metadata: metadata indicating languages, metadata indicating themes, and metadata indicating data object types. Metadata that is generated for a segment may comprise any combination of such categories. For example, the metadata may comprise one or more items indicating languages, one or more items indicating themes, and one or more items indicating data object types.

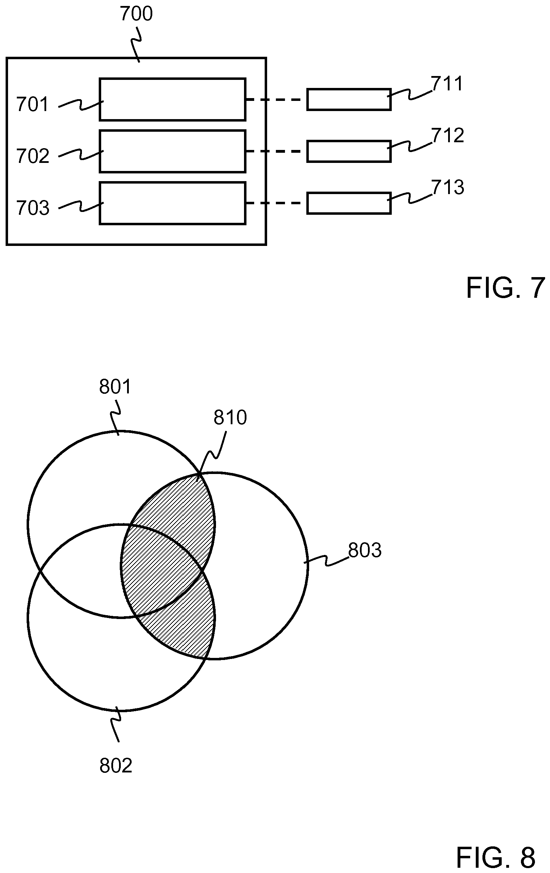

FIG. 7 schematically illustrates a data object 700 that has undergone the data object analysis step 601. The data object 700 comprises several segments 701-703. Respective metadata 711-713 has been generated for respective segments 701-703. For example, a segment may comprise one language, whereas another segment may comprise another language, or a different mix of languages. As another example, a segment may relate to a theme that is not sensitive to the terminal owner, whereas another segment may relate to a different theme that is sensitive to the terminal owner.

In a list identification step 602, the list identification module 251 carries out a search in the access list database 270. This search serves to identify one or more interest-based access lists and one or more privacy-based access lists that specify metadata matching with metadata that characterizes the data object. For example, let it be assumed that the data object comprises a segment in which theme T3 occurs, which is included in the metadata template illustrated in FIG. 4. In case the collection of interest-based access lists illustrated in FIG. 2 comprises an interest-based access list that specifies this theme T3, this list is identified as being relevant for the data object and, more specifically, as relevant for the segment concerned. Similarly, in case the collection of privacy-based access lists comprises a privacy-based access list that specifies this theme T3, this list will also be identified.

There are several approaches for determining whether metadata matches, or not. For example, a strict matching criterion can be applied: metadata should be identical. Instead, an approximate matching criterion can be applied: two metadata match if these two metadata satisfy a given similarity criterion. Such a similarity evaluation may involve Cosine or Pearson correlation coefficients. The strict matching criterion can be applied for identifying privacy-based access lists. The approximate matching criterion can be applied for identifying interest-based access lists.

In an evaluation step 603, the access list composition module 250 checks whether the data object comprises a sensitive segment, or not. A sensitive segment is a segment including information that is sensitive to the terminal owner's privacy. A sensitive segment may be identified by means of various methods. The following is an example. The access list composition module 250 may check whether metadata that has been generated for a segment has been declared as sensitive by the terminal owner. For example, the terminal owner may declare a particular theme as sensitive. A privacy-based access list for this theme will then typically comprise relatively few communication medium users. Thus, a privacy-based access list that has been identified for a sensitive segment typically comprises relatively few communication medium users. Relatively means in comparison with one or more other privacy-based access lists that have been identified for one or more other segments, which are less sensitive or not sensitive at all.

In a signaling step 604, the access list composition module 250 can provide an indication that the data object comprises a sensitive segment, together with an identification of the sensitive segment. This indication can be presented to the terminal owner through a user interface. The terminal owner may then, for example, remove the sensitive segment from the data object, so as to obtain a truncated version of the data object. This truncated version can be made available to a larger group of communication medium users than the data object in its full version. Alternatively, in a truncating step 605, the access list composition module 250 may automatically generate such a truncated version and, optionally, inform the terminal owner of this.

In a list combination step 606, the list combination module 252 combines the one or more interest-based access lists and the one or more privacy-based access lists that have been identified, so as to obtain the recommended access list. This combining of lists is made according to the following rules. The interest-based access lists are fused together so as to obtain a fused interest-based access list. That is, the fused interest-based access list results from a union of the interest-based access lists that have been identified. The fused-interest-based access list identifies all communication medium users that may be interested in at least a part of the data object. This list thus reflects a relatively wide audience.

An intersection is taken of the fused interest-based list and the one or more privacy-based access lists that have been identified. This intersection forms the recommended access list. The recommended access list thus specifies those communication medium users who occur in at least one interest-based access list that has been identified, as well as in at least one privacy-based access list that has been identified.

FIG. 8 conceptually illustrates a combining of identified lists 801-803 so as to define a recommended access list. In FIG. 8, two different interests-based access lists 801, 802 are represented, and one privacy-based access list 803. An intersection 810 that forms the recommended access list is indicated with hatched lines that provide a gray appearance. For inclusion in the recommended access list, it is sufficient for a communication medium user to be in only one of the two interest-based access lists 801, 802. However, the communication medium user must be in the privacy-based access list 803. Priority is thus given to privacy over interest, although a largest possible audience is sought from the point of view of interest.

In case several privacy-based access lists have been identified for a data object, these lists may be fused in the following manner. A privacy-based access list identifies, at least implicitly, communication medium users who should not be given access to the data object. The communication medium users who should be excluded from having access to the data object are, for example, those who appear in a contact database of the terminal owner, but who are not explicitly identified in the privacy-based access list as being authorized to have access. In case several privacy-based access lists have been identified, a union may be formed of communication medium users excluded by at least one among these privacy-based access lists. Accordingly, a fused privacy-based access list is generated that specifies all communication medium users that should be excluded from having access to the data object. These excluded communication medium users can then be removed from the fused interest-based access list mentioned hereinbefore, which specifies communication medium users who are potentially interested in accessing the data object. This privacy-based removal of these potentially-interested communication medium users produces the recommended access list.

It should be noted that a distinction can be made between different types of access, such as, for example a read-type access and write-type access. The recommended access list may comprise an attribute for a communication medium user in this list defining one or more types of access that the communication medium user has. The recommended access list may also comprise respective sub-lists for respective types of access. For example, a sub-list may specify communication medium users that have a read-type access and a write-type access. A complementary sub-list may specify further communication medium users that have a read-type access only.

### FINAL REMARKS

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied to advantage in numerous types of products or methods related to providing access to a data object. For example, a person may be given access to a data object by storing the data object from a network server, while subjecting access to the data object to successful authentication.

An interest-based access list need not necessarily be automatically generated as described hereinbefore. An interest-based access list may be user defined: a user specifies a group of persons and a characteristic that those persons have in common. A privacy-based access list may equally be user defined. The user specifies a group of persons and a type of information that only those persons are allowed to access. An access list may equally be generated interactively.

In general, there are numerous different ways of implementing the invention, whereby different implementations may have different topologies. In any given topology, a single module may carry out several functions, or several modules may jointly carry out a single function. In this respect, the drawings are very diagrammatic. There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows distant control of a device in accordance with the invention. For example, software may be stored in a suitable device readable medium, such as, for example, a magnetic disk, an optical disk, or a memory circuit. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A method of defining an access policy with respect to a data object (700), the method involving a data structure (270) that comprises:
(i) at least one interest-based access list (271) specifying a metadata and a group of persons that are potentially interested in accessing a data object that can be **characterized by** this metadata; and
(ii) at least one privacy-based access list (272) specifying a metadata and a group of persons that are authorized to access a data object that can be **characterized by** this metadata;
the method comprising:
- an analysis step (601) in which the data object is analyzed so as to obtain at least one metadata that characterizes the data object;
- a list identification step (602) in which a search is carried out in the data structure so as to identify at least one interest-based access list and at least one privacy-based access list specifying metadata that matches with a metadata that characterizes the data object;
- an access list composition step (606) in which a recommended access list for the data object is composed, the recommended access list specifying those persons who occur in at least one interest-based access list that has been identified, as well as in at least one privacy-based access list that has been identified.

2. A method according to claim 1, wherein the metadata characterizes at least one of the following: content of the data object, a language in the data object, and a type to which the data object belongs.

3. A method according to claim 1, wherein, in the list identification step (602), an access list is identified in case the metadata that characterizes the data object and the metadata specified by the access list are identical.

4. A method according to claim 1, wherein, in the list identification step (602), an access list is identified in case the metadata that characterizes the data object and the metadata specified by the access list satisfy a given similarity criterion.

5. A method according to claim 1, wherein a privacy-based access list (423, 424) specifies for a person at least one among several types of actions that the person can carry out with respect to a data object.

6. A method according to claim 1, wherein
- in the analysis step (601), the data object (700), which comprises several segments, is analyzed on a per segment basis, so as to obtain respective metadata (711-713) for respective segments (701-703) of the data object; and
- in the list identification step (602), respective privacy-based access lists are identified for respective segments of the data object.

7. A method according to claim 6, wherein the method comprises a signaling step (604) in case the data object comprises a segment including sensitive information so that a privacy-based access list for this segment comprises relatively few persons, in which step an indication of the presence of such a sensitive segment is provided through a user interface.

8. A method according to claim 6, wherein the method comprises a truncating step (605) in case the data object comprises a segment including sensitive information so that a privacy-based access list for this segment comprises relatively few persons, in which step a truncated version of the data object is formed that cannot provide access attached you will find however, however, suggest thank you for your comments and suggestions.

9. A method according to claim 1, comprising:
- a metadata generation step (301-303) in which a collection of data objects (260), which has at least partially been obtained from different persons, is analyzed so as to generate respective metadata for respective data objects, whereby a metadata characterizes a data object;
- an interest profile building step (304, 305) in which respective interest profiles are defined for respective persons, an interest profile of a person specifying metadata that characterize data objects that have been obtained from that person,
- a clustering step (307) in which a cluster of persons is identified that have similar metadata interest profiles in respect of at least one metadata, the cluster of persons forming an interest-based access list that relates to the at least one metadata.

10. A method according to claim 9, wherein the metadata generation step (301-303) involves a semantic analysis (302) of data objects.

11. A method according to claim 9, wherein, in the interest profile building step (304, 305) respective interest profiles are defined according to a template (400) that specifies respective metadata items (L1, L2, T1-T3, O1-O3) and respective fields associated therewith, whereby a field associated with a metadata item is provided with an indication of the extent to which the metadata item can characterize data objects that have been obtained from the person to which the interest profile pertains.

12. A method according to claim 11, wherein the respective metadata items L1, L2, T1-T3, O1-O3) specified in the template (400) are defined on the basis of metadata generated in the metadata generation step (301-303).

13. A method according to claim 1, comprising:
- a propagation evaluation step (304) in which respective propagation scores are assigned to respective persons by assessing dissemination of data objects by these respective persons, a propagation score of a person representing the extent to which that person disseminates data objects; and
- a clustering step (307) in which a cluster of respective persons is defined that have respective propagation scores that are all acceptable with regard to at least one metadata, the cluster of persons forming a privacy-based access list that relates to the at least one metadata.

14. A device readable medium comprising a set of instructions that enables a processor, which is capable of executing the set of instructions, to carry out the method according to claim 1.

15. A communication terminal (121) arranged to access a data structure that comprises:
-
(i) at least one interest-based access list (271) specifying a metadata and a group of persons that are potentially interested in accessing a data object that can be **characterized by** this metadata; and
(ii) at least one privacy-based access list (272) specifying a metadata and a group of persons that are authorized to access a data object that can be **characterized by** this metadata;
the communication terminal comprising:
- an analysis module (210) arranged to analyze a data object so as to obtain at least one metadata that characterizes the data object;
- a list identification module (251) arranged to carry out a search in the data structure so as to identify at least one interest-based access list and at least one privacy-based access list specifying metadata that matches with a metadata that characterizes the data object;
- an access list composition module (252) arranged to compose a recommended access list for the data object, the recommended access list specifying those persons who occur in at least one interest-based access list that has been identified, as well as in at least one privacy-based access list that has been identified.

## Patentansprüche

1. Verfahren zum Definieren einer Zugangsrichtlinie in Bezug auf ein Datenobjekt (700), wobei das Verfahren eine Datenstruktur (270) einbezieht, die umfasst:
-
(i) mindestens eine interessen-basierte Zugangsliste (271), die eine Metadateneinheit und eine Gruppe von Personen spezifiziert, die potenziell interessiert ist am Zugriff auf ein Datenobjekt, das durch diese Metadaten gekennzeichnet werden kann; und
(ii) mindestens eine privacy-basierte Zugangsliste (272), die eine Metadateneinheit und eine Gruppe von Personen spezifiziert, die autorisiert sind für den Zugriff auf ein Datenobjekt, das durch diese Metadaten gekennzeichnet werden kann;
wobei das Verfahren umfasst:
- einen Analyseschritt (601), in dem das Datenobjekt analysiert wird, sodass mindestens eine Metadateneinheit erhalten wird, die das Datenobjekt kennzeichnet;
- einen Schritt der Listenidentifizierung (602), in dem eine Suche in der Datenstruktur durchgeführt wird, um mindestens eine interessen-basierte Zugangsliste und mindestens eine privacy-basierte Zugangsliste zu identifizieren, die Metadaten spezifizieren, welche zu den Metadaten passen, welche das Datenobjekt kennzeichnen;
- einen Schritt für die Zugangslistenerstellung (606), in dem eine empfohlene Zugangsliste für das Datenobjekt erstellt wird, wobei die empfohlene Zugangsliste diejenigen Personen spezifiziert, die in mindestens einer interessen-basierten Zugangsliste auftreten, die identifiziert worden ist, sowie in mindestens einer privacy-basierten Zugangsliste, die identifiziert worden ist.

2. Verfahren nach Anspruch 1, wobei die Metadaten mindestens eins der folgenden kennzeichnen: Inhalt des Datenobjekts, eine Sprache in dem Datenobjekt und einen Typen, zu dem das Datenobjekt gehört.

3. Verfahren nach Anspruch 1, wobei, im Schritt der Listenidentifizierung (602) eine Zugangsliste identifiziert wird für den Fall, dass die Metadaten, die das Datenobjekt kennzeichnen, und die Metadaten, welche von der Zugangsliste spezifiziert werden, identisch sind.

4. Verfahren nach Anspruch 1, wobei, im Schritt der Listenidentifizierung (602) eine Zugangsliste identifiziert wird für den Fall, dass die Metadaten, die das Datenobjekt kennzeichnen, und die Metadaten, welche von der Zugangsliste spezifiziert werden, ein gegebenes Ähnlichkeitskriterium erfüllen.

5. Verfahren nach Anspruch 1, wobei eine privacy-basierte Zugangsliste (423, 424) für eine Person mindestens einen mehrerer Typen von Aktionen spezifiziert, welche die Person ausführen kann in Bezug auf ein Datenobjekt.

6. Verfahren nach Anspruch 1, wobei
- in dem Analyseschritt (601) das Datenobjekt (700), welches mehrere Segmente umfasst, auf einer Pro-Abschnitt-Basis analysiert wird, sodass entsprechende Metadaten (711- 713) für entsprechende Segmente (701-703) des Datenobjekts erhalten werden; und
- in dem Schritt der Listenidentifizierung (602) entsprechende privacy-basierte Zugangslisten für entsprechende Segmente des Datenobjekts identifiziert werden.

7. Verfahren nach Anspruch 6, wobei das Verfahren einen Signalisierungsschritt (604) umfasst für den Fall, dass das Datenobjekt ein Segment umfasst, das vertrauliche Information einschließt, sodass eine privacy-basierte Zugangsliste für dieses Segment relativ wenige Personen umfasst, in welchem Schritt eine Anzeige des Vorhandenseins eines solchen vertraulichen Segments durch eine Benutzerschnittstelle bereitgestellt wird.

8. Verfahren nach Anspruch 6, wobei das Verfahren einen Kürzungsschritt (605) umfasst für den Fall, dass das Datenobjekt ein Segment umfasst, das vertrauliche Information einschließt, sodass eine privacy-basierte Zugangsliste für dieses Segment relativ wenige Personen umfasst.

9. Verfahren nach Anspruch 1, umfassend:
- einen Schritt des Erzeugens von Metadaten (301-303), in dem eine Sammlung von Datenobjekten (260), die mindestens teilweise von verschiedenen Personen erhalten worden sind, analysiert wird, um entsprechende Metadaten für entsprechende Datenobjekte zu erzeugen, wobei eine Metadateneinheit ein Datenobjekt kennzeichnet;
- einen Interessenprofilaufbauschritt (304, 305), in dem entsprechende Interessenprofile für entsprechende Personen definiert werden, wobei ein Interessenprofil einer Person Metadaten spezifiziert, welche Datenobjekte kennzeichnen, die von dieser Person erhalten worden sind;
- einen Bündelungsschritt (307), in dem ein Cluster von Personen identifiziert wird, die ähnliche Metadateninteressenprofile aufweisen in Bezug auf mindestens eine Metadateneinheit, wobei der Cluster von Personen eine interessen-basierte Zugangsliste bildet, die sich auf die mindestens eine Metadateneinheit bezieht.

10. Verfahren nach Anspruch 9, wobei der Schritt des Erzeugens von Metadaten (301, 303) eine semantische Analyse (302) von Datenobjekten einbezieht.

11. Verfahren nach Anspruch 9, wobei im Profilaufbauschritt (304, 305) entsprechende Interessenprofile definiert werden gemäß einer Vorlage (400), die entsprechende Metadateneinheiten (L1, L2, T1-T3, 01-03) und entsprechende damit verbundene Felder spezifiziert, wobei ein mit einer Metadateneinheit verbundenes Feld mit einer Anzeige des Ausmaßes bereitgestellt wird, in dem die Metadateneinheit Datenobjekte kennzeichnen kann, die erhalten worden sind von der Person, zu der das Interessenprofil gehört.

12. Verfahren nach Anspruch 11, wobei die entsprechenden Metadateneinheiten (L1, L2, T1-T3, 01-03), die in der Vorlage (400) spezifiziert sind, definiert werden auf Grundlage von Metadaten, die im Schritt des Erzeugens von Metadaten (301-303) erzeugt werden.

13. Verfahren nach Anspruch 1, umfassend:
- einen Ausbreitungsbewertungsschritt (304), in dem entsprechende Ausbreitungspunktzahlen entsprechenden Personen zugewiesen werden durch Bewertung der Verbreitung von Datenobjekten durch diese entsprechenden Personen, wobei ein Ausbreitungspunkt einer Person das Ausmaß darstellt, in dem diese Person Datenobjekte verbreitet; und
- einen Bündelungsschritt (307), in dem ein Cluster von entsprechenden Personen identifiziert wird, die entsprechende Ausbreitungspunktzahlen aufweisen, die alle akzeptabel sind in Bezug auf mindestens eine Metadateneinheit, wobei der Cluster von Personen eine privacy-basierte Zugangsliste bildet, die sich auf die mindestens eine Metadateneinheit bezieht.

14. Vorrichtungslesbares Mittel, umfassend einen Satz von Befehlen, die einem Prozessor ermöglichen, der fähig ist zum Ausführen des Satzes von Befehlen, das Verfahren nach Anspruch 1 durchzuführen.

15. Kommunikationsendgerät (121), angeordnet zum Zugreifen auf eine Datenstruktur, die umfasst:
(i) mindestens eine interessen-basierte Zugangsliste (271), die Metadaten und eine Gruppe von Personen spezifiziert, die potenziell interessiert ist am Zugriff auf ein Datenobjekt, das durch diese Metadaten gekennzeichnet werden kann; und
(ii) mindestens eine privacy-basierte Zugangsliste (272), die Metadaten und eine Gruppe von Personen spezifiziert, die autorisiert sind für den Zugriff auf ein Datenobjekt, das durch diese Metadaten gekennzeichnet werden kann;
wobei das Kommunikationsendgerät umfasst:
- ein Analysemodul (210), das angeordnet ist zum Analysieren eines Datenobjekts, um mindestens eine Metadateneinheit zu erhalten, die das Datenobjekt kennzeichnet;
- ein Modul für die Listenidentifizierung (251), das angeordnet ist zum Suchen in der Datenstruktur, um mindestens eine interessen-basiert Zugangsliste und mindestens eine privacy-basierte Zugangsliste zu identifizieren, die Metadaten spezifizieren, welche zu den Metadaten passen, die das Datenobjekt kennzeichnen;
- ein Modul für die Zugangslistenerstellung (252), das angeordnet ist zum Erstellen einer empfohlenen Zugangsliste für das Datenobjekt erstellt wird, wobei die empfohlene Zugangsliste diejenigen Personen spezifiziert, die in mindestens einer interessen-basierten Zugangsliste auftreten, die identifiziert worden ist, sowie in mindestens einer privacy-basierten Zugangsliste, die identifiziert worden ist.

## Revendications

1. Procédé de définition d'une politique d'accès par rapport à un objet de données (700), le procédé impliquant une structure de données (270) qui comprend :
-
(i) au moins une liste d'accès basée sur les intérêts (271) spécifiant une métadonnée et un groupe de personnes qui sont potentiellement intéressées par l'accès à un objet de données qui peut être **caractérisé par** cette métadonnée ; et
(ii) au moins une liste d'accès basée sur la confidentialité (272) spécifiant une métadonnée et un groupe de personnes qui sont autorisées à accéder à un objet de données qui peut être **caractérisé par** cette métadonnée ;
le procédé comprenant :
- une étape d'analyse (601) dans laquelle l'objet de données est analysé afin d'obtenir au moins une métadonnée qui caractérise l'objet de données ;
- une étape d'identification de liste (602) dans laquelle une recherche est effectuée dans la structure de données de sorte à identifier au moins une liste d'accès basée sur les intérêts et au moins une liste d'accès basée sur la confidentialité spécifiant une métadonnée qui correspond à une métadonnée qui caractérise l'objet de données ;
- une étape de composition de liste d'accès (606) dans laquelle une liste d'accès recommandée pour l'objet de données est composée, la liste d'accès recommandée spécifiant les personnes qui apparaissent dans au moins une liste d'accès basée sur les intérêts qui a été identifiée, ainsi que dans au moins une liste d'accès basée sur la confidentialité qui a été identifiée.

2. Procédé selon la revendication 1, dans lequel la métadonnée caractérise au moins un des éléments suivants : un contenu de l'objet de données, un langage dans l'objet de données et un type auquel l'objet de données appartient.

3. Procédé selon la revendication 1, dans lequel, dans l'étape d'identification de liste (602), une liste d'accès est identifiée au cas où la métadonnée qui caractérise l'objet de données et la métadonnée spécifiée par la liste d'accès seraient identiques.

4. Procédé selon la revendication 1, dans lequel, dans l'étape d'identification de liste (602), une liste d'accès est identifiée au cas où la métadonnée qui caractérise l'objet de données et la métadonnée spécifiée par la liste d'accès satisferaient un critère de similarité donné.

5. Procédé selon la revendication 1, dans lequel une liste d'accès basée sur la confidentialité (423, 424) spécifie pour une personne au moins un type d'action parmi plusieurs types d'actions que la personne peut effectuer par rapport à un objet de données.

6. Procédé selon la revendication 1, dans lequel
- dans l'étape d'analyse (601), l'objet de données (700), qui comprend plusieurs segments, est analysé par segment, afin d'obtenir des métadonnées respectives (711 à 713) pour des segments respectifs (701 à 703) de l'objet de données ; et
- dans l'étape d'identification de liste (602), des listes d'accès basées sur la confidentialité respectives sont identifiées pour des segments respectifs de l'objet de données.

7. Procédé selon la revendication 6, dans lequel le procédé comprend une étape de signalisation (604) au cas où l'objet de données comprendrait un segment comprenant des informations sensibles de sorte qu'une liste d'accès basée sur la confidentialité pour ce segment comprenne relativement peu de personnes, étape dans laquelle une indication de la présence d'un tel segment sensible est fournie par une interface utilisateur.

8. Procédé selon la revendication 6, le procédé comprenant une étape de troncature (605) au cas où l'objet de données comprendrait un segment comprenant des informations sensibles de sorte qu'une liste d'accès basée sur la confidentialité pour ce segment comprenne relativement peu de personnes.

9. Procédé selon la revendication 1, comprenant l'étape suivante :
- une étape de génération de métadonnées (301 à 303) dans laquelle une collecte d'objets de données (260), qui a été au moins partiellement obtenue auprès de différentes personnes, est analysée afin de générer des métadonnées respectives pour des objets de données respectifs, une métadonnée caractérisant un objet de données ;
- une étape d'établissement de profils d'intérêt (304, 305) dans laquelle des profils d'intérêt respectifs sont définis pour des personnes respectives, un profil d'intérêt d'une personne spécifiant des métadonnées qui caractérisent des objets de données qui ont été obtenus auprès de cette personne,
- une étape de regroupement (307) dans laquelle un groupe de personnes, qui ont des profils d'intérêt de métadonnées similaires par rapport à au moins une métadonnée, est identifié, le groupe de personnes formant une liste d'accès basée sur les intérêts qui se rapporte à l'au moins une métadonnée.

10. Procédé selon la revendication 9, dans lequel l'étape de génération de métadonnées (301 à 303) implique une analyse sémantique (302) d'objets de données.

11. Procédé selon la revendication 9, dans lequel, dans l'étape d'établissement de profils d'intérêt (304, 305) des profils d'intérêt respectifs sont définis conformément à un modèle (400) qui spécifie des éléments de métadonnées respectifs (L1, L2, T1 à T3, O1 à O3) et des champs respectifs associés à ceux-ci, un champ associé à un élément de métadonnée disposant d'une indication du degré selon lequel l'élément de métadonnée peut caractériser des objets de données qui ont été obtenus auprès de la personne à laquelle le profil d'intérêt appartient.

12. Procédé selon la revendication 11, dans lequel les éléments de métadonnées respectifs L1, L2, T1 à T3, O1 à O3 spécifiés dans le modèle (400) sont définis sur la base de métadonnées générées dans l'étape de génération de métadonnées (301 à 303).

13. Procédé selon la revendication 1, comprenant l'étape suivante :
- une étape d'évaluation de propagation (304) dans laquelle des scores de propagation respectifs sont attribués à des personnes respectives en évaluant une dissémination d'objets de données par ces personnes respectives, un score de propagation d'une personne représentant le degré selon lequel cette personne dissémine des objets de données ; et
- une étape de regroupement (307) dans laquelle un groupe de personnes respectives, qui ont des scores de propagation respectifs qui sont tous acceptables par rapport à au moins une métadonnée, est défini, le groupe de personnes formant une liste d'accès basée sur la confidentialité qui se rapporte à l'au moins une métadonnée.

14. Support lisible par un dispositif comprenant un ensemble d'instructions qui permet à un processeur, qui peut exécuter l'ensemble d'instructions, d'exécuter le procédé selon la revendication 1.

15. Terminal de communication (121) conçu pour accéder à une structure de données qui comprend :
- (i) au moins une liste d'accès basée sur les intérêts (271) spécifiant une métadonnée et un groupe de personnes qui sont potentiellement intéressées par l'accès à un objet de données qui peut être **caractérisé par** cette métadonnée ; et
- (ii) au moins une liste d'accès basée sur la confidentialité (272) spécifiant une métadonnée et un groupe de personnes qui sont autorisées à accéder à un objet de données qui peut être **caractérisé par** cette métadonnée ;
le terminal de communication comprenant :
- un module d'analyse (210) conçu pour analyser un objet de données de sorte à obtenir au moins une métadonnée qui caractérise l'objet de données ;
- un module d'identification de liste (251) conçu pour effectuer une recherche dans la structure de données de sorte à identifier au moins une liste d'accès basée sur les intérêts et au moins une liste d'accès basée sur la confidentialité spécifiant une métadonnée qui correspond à une métadonnée qui caractérise l'objet de données ;
- un module de composition de liste d'accès (252) conçu pour composer une liste d'accès recommandée pour l'objet de données, la liste d'accès recommandée spécifiant les personnes qui apparaissent dans au moins une liste d'accès basée sur les intérêts qui a été identifiée, ainsi que dans au moins une liste d'accès basée sur la confidentialité qui a été identifiée.
